# EUROPÄISCHE PATENTSCHRIFT

(11) **EP 1 712 669 B1**
(45) Veröffentlichungstag und Bekanntmachung des Hinweises auf die Patenterteilung: **29.07.2009**
(21) Anmeldenummer: 05007885.6
(22) Anmeldetag: 11.04.2005
(51) Int. Cl.: D04H 13/00, B29D 7/01, B32B 5/00

(54) **Verfahren zur Herstellung einer elastischen Verbundstoffbahn**
Method of making an elastic composite sheet material
Procédé pour la production d'une bande textile à plusieurs couches

(43) Veröffentlichungstag der Anmeldung: 18.10.2006
(73) Patentinhaber: Nordenia Deutschland Gronau GmbH, 48599 Gronau (DE)
(72) Erfinder: Schönbeck, Marcus, 33775 Versmold (DE)
(74) Vertreter: Albrecht, Rainer Harald

(56) Entgegenhaltungen:
- DE-U- 29 825 018
- US-A- 4 476 180

## Beschreibung

Die Erfindung betrifft ein Verfahren zur Herstellung einer elastischen Verbundstoffbahn, bei dem ein Deckmaterial unter Verwendung eines Hotmelt-Klebstoffes auf eine aus einem thermoplastischen Elastomer bestehende Trägerfolie aufkaschiert wird.

Die elastische Verbundstoffbahn kann für die Herstellung von elastischen Abschnitten an Kleidungsstücken und Hygieneartikeln, beispielsweise als elastischer Verschlussstreifen für Babywindeln, verwendet werden.

In der Druckschrift DE 298 25 018 wird ein dehnbarer, elastischer Streifen beschrieben, der vorzugsweise als Verschlussstreifen einer Einweg-Windel eingesetzt wird. Die coextrudierte Trägerfolie, auf die ein Faservliesstoff kaschiert wird, weist einen Kern aus einem thermoplastischen Elastomer auf, durch den die elastischen Eigenschaften des Streifens ermöglicht werden. Bevorzugte Elastomere sind Styrol-Isopren-Styrol-Blockcopolymere (SIS), Styrol-Butadien-Styrol-Blockcopolymere (SBS) oder Styrol-Ethylen/Butylen-Styrol-Blockcopolymere (SEBS), welche klebrige Eigenschaften aufweisen. Bei der coextrudierten Trägerfolie ist der Kern zwischen zwei Außenschichten aus einem nicht klebenden thermoplastischen Polymer angeordnet. Durch die nicht klebenden Eigenschaften der Außenschichten der Coextrusionsfolie wird ein Verblocken der Trägerfolie bei einem Aufrollen auf eine Folienrolle verhindert.

Für die Verhinderung einer Verblockung von Folienrollen ist aus der Druckschrift US 4 476 180 das Auftragen von Puder aus Siliziumdioxid, Kreide, Lehm sowie dem hochschmelzenden Polytetrafluorethylen als Abstandsmaterial zwischen den Lagen einer Folienrolle bekannt. Im Stand der Technik werden ferner auch Stärke oder Talkum als geeignete Substanzen genannt. Diese Pudermaterialien führen jedoch bei einem Verkleben mit einem Hotmelt-Kelbstoff zu einer deutlichen Herabsetzung der Klebekräfte, weshalb versucht wird, nur gerade soviel Puder aufzutragen, wie für die Verhinderung einer Verblockung notwendig ist. Zustäzlich wird auch versucht, die Herabsetzung der Klebekraft mit einer hohen Menge an Hotmelt-Klebstoff zu kompensieren, was einerseits nur bedingt möglich ist und andererseits zu einer Erhöhung der Produktionskosten führt. Es ist auch zu beachten, dass bei einer Minimierung der aufgetragenen Pudermenge im besonderen Maße auch Einflüsse wie beispielsweise die Lagerdauer und - temperatur der Folienrollen und die mögliche Einwirkung äußerer Kräfte auf die Folienrollen genau berücksichtigt werden müssen.

Vor diesem Hintergrund liegt der Erfindung die Aufgabe zugrunde, ein Verfahren anzugeben, bei dem bei der Laminierung eines Deckmaterials auf eine von einer Folienrolle abgerollten Trägerfolie aus einem thermoplastischen Elastomer mit einem geringen Einsatz von Hotmelt-Klebstoff hohe Verbundfestigkeiten erreicht werden. Des Weiteren soll das Verfahren kostengünstig und flexibel einsetzbar sein.

Ausgehend von einem Verfahren mit den eingangs beschriebenen Merkmalen wird die Aufgabe erfindungsgemäß dadurch gelöst, dass die von einer Folienrolle verarbeitete Trägerfolie zumindest auf einer Seite einen polymeren Puder aufweist, welcher ein Verblocken der Lagen der Trägerfolie in der Folienrolle verhindert, wobei die Schmelztemperatur des Puders kleiner oder gleich der Verklebungstemperatur des Hotmelt-Klebstoffes ist, so dass der Puder bei der Kaschierung schmilzt. Der Begriff "Puder" bezeichnet ein feinteiliges Pulver. Der aufgeschmolzene Puder mischt sich in den Hotmelt-Kleber ein, wodurch aufgrund der geringen Menge des Puders und der Ausbildung zwischen molekularer Kräfte, der negative Einfluss des Puder-Materials auf die Verbundfestigkeit gering ist.

Das Deckmaterial kann ein- oder beidseitig auf die Trägerfolie kaschiert werden, wobei in einer bevorzugten Ausführung ein textiles Material, vorzugsweise ein Faservliesstoff bzw. nichtgewebtes Fasermaterial (Nonwoven), als Deckmaterial verwendet wird. Das Nonwoven kann beispielsweise ein Flächengewicht zwischen 20 und 35 g/m² aufweisen. Als Trägerfolie wird vorzugsweise eine durch Extrusion hergestellte Monofolie aus einem Polymer der Gruppe der Styrol-Isopren-Styrol-Blockcopolymere (SIS), Styrol-Butadien-Styrol-Blockcopolymere (SBS), Styrol-Ethylen/Butylen-Styrol-Blockcopolymere (SEBS), Polyurethane oder Ethylencopolymere verwendet. Im besonderen Maße sind Trägerfolien mit einer Dicke zwischen 40 bis 70 µm geeignet, die in einem Flachfolienextrusionsverfahren gefertigt werden.

Als polymerer Puder, welcher vorzugsweise mit einem Flächengewicht von kleiner oder gleich 1 g/m² auf der Trägerfolie vorliegt, ist im besonderen Maße ein polymerer Puder geeignet, der aus einem Polyolefin, beispielsweise aus Polyethylen oder auch aus Ethylen-Vinylacetat (EVA), besteht. Der polymere Puder wird vor dem Aufrollen der Trägerfolie nach dessen Herstellung auf zumindest eine Seite der Trägerfolie aufgebracht. Die Menge des aufgebrachten Puders kann vor dem Aufrollen durch ein Absaugen oder ein Abbürsten der Trägerfolie auf das minimal notwendige Maß reduziert werden. Durch ein Absaugen oder Abbürsten wird im Besonderen Puder von der Trägerfolie entfernt, der, beispielsweise bei einer mehrlagigen Schichtung des Puders, nicht direkt an der klebrigen Trägerfolie haftet. Grundsätzlich ist auch ein Absaugen oder Abbürsten der Trägerfolie zur Reduzierung der Pudermenge nach dem Abrollen und vor der Laminierung möglich.

Das Deckmaterial wird unter Verwendung eines Hotmelt-Klebstoffes auf die Trägerfolie aufkaschiert. Bei typischen Verklebungstemperaturen von 140 bis 170 °C schmilzt der Puder und verteilt sich in dem Hotmelt-Klebstoff. Die Verklebungstemperatur ist abhängig von dem Hotmelt-Klebstoff und der Schmelztemperatur des Puders zu wählen und im Allgemeinen nicht auf den genannten Bereich beschränkt. Besonders geeignet sind Hotmelt-Klebstoffe aus der Gruppe der SIS- und SBS-basierten Polymere. Das Flächengewicht mit dem der Hotmelt-Klebstoff auf jede Seite der Trägerfolie, auf die das Deckmaterial kaschiert wird, aufgebracht wird, wird abhängig von dem verwendeten Deckmaterial gewählt und liegt vorzugsweise in einem Bereich zwischen 7 und 20 g/m².

Im Folgenden wird die Erfindung anhand einer lediglich ein Ausführungsbeispiel darstellenden Zeichnung näher erläutert. Es zeigen schematisch:
- Fig. 1: ein Verfahren zur Herstellung einer elastischen Verbundstoffbahn, bei dem ein Deckmaterial unter Verwendung eines Hotmelt-Klebstoffes auf eine Trägerfolie aufkaschiert wird,
- Fig. 2: eine Trägerfolie, die auf einer Seite ein polymeres Puder aufweist,
- Fig. 3: eine Darstellung der Lagen einer elastischen Verbundstoffbahn.

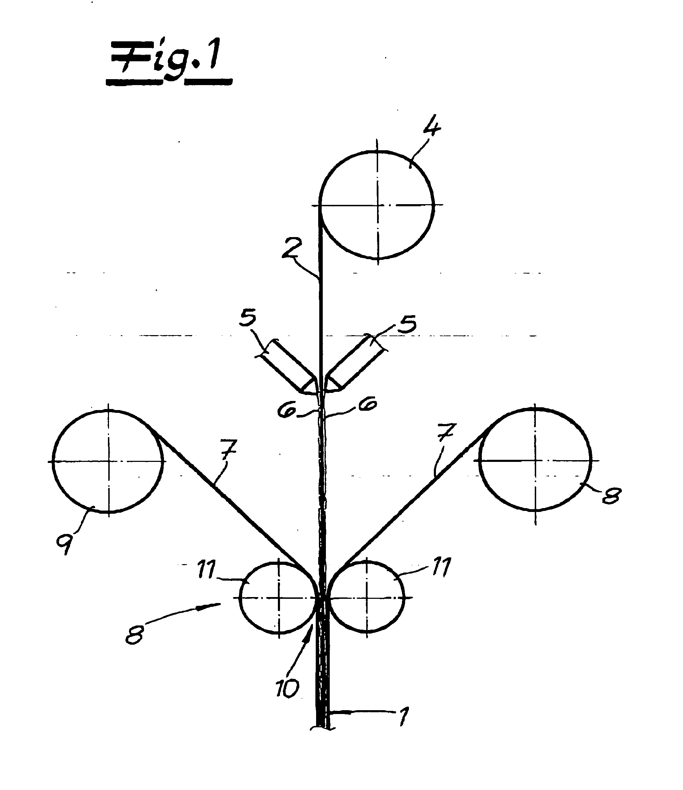

In Fig. 1 ist ein Verfahren zur Herstellung einer elastischen Verbundstoffbahn 1 dargestellt. Die Trägerfolie 2, die einseitig einen polymeren Puder 3 aufweist, wird von einer Folienrolle 4 abgerollt und beidseitig mit einem Hotmelt-Klebstoff 6 versehen. Die Trägerfolie 2, bei der sich der geschmolzene Puder 3 in den Hotmelt-Klebstoff 6, welcher vorzugsweise aus einer Gruppe der SIS- und SBS-basierten Polymere stammt, wird zusammen mit zwei Schichten eines Deckmaterials 7, einem Kaschierwerk 8 zugeführt. Das Deckmaterial 7 besteht aus Nonwoven, d. h. einem Faservliesstoff. Die Bahnen des Faservliesstoffes werden von Rollen 9 abgerollt und in einem Walzenspalt 10 zwischen den Kaschierwalzen 11 des Kaschierwerkes 8 auf die Trägerfolie 2 aufkaschiert.

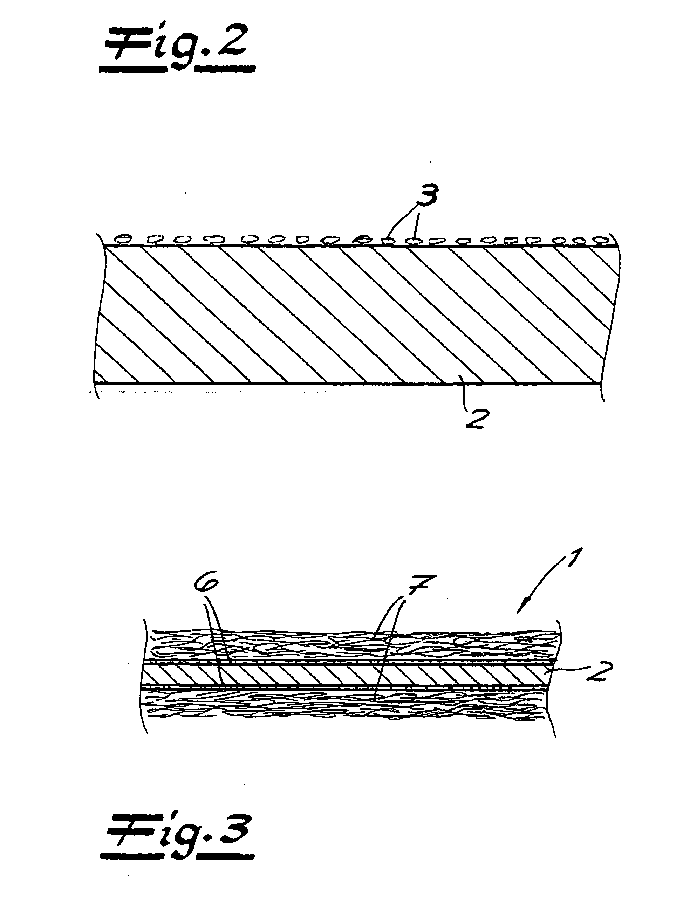

In der Fig. 2 ist die Trägerfolie 2 vor dem Kaschiervorgang dargestellt. Es handelt sich um eine durch Extrusion hergestellte Monofolie aus einem Polymer der Gruppe der Styrol-Isopren-Styrol-Blockcopolymere (SIS), Styrol-Butadien-Styrol-Blockcopolymere (SBS), Styrol-Ethylen/Butylen-Styrol-Blockcopolymere (SEBS), Polyurethane oder Ethylencopolymere. Die Trägerfolie 2, die typischerweise eine Dicke zwischen 50 und 70 µm aufweist, ist auf einer Seite mit dem polymeren Puder 3 versehen. Der polymere Puder 3, welcher bevorzugt aus einem Polyolefin auf Polyethylenbasis oder beispielsweise auch aus Ethylen-Vinylacetat (EVA) besteht, weist ein geringes Flächengewicht von kleiner oder gleich 1 g/m² auf. Diese Pudermenge ist gerade ausreichend, um eine Verblockung der Lagen der Trägerfolie 2 in der Folienrolle 4 zuverlässig zu vermeiden.

Fig. 3 zeigt einen Schnitt durch eine nach dem erfindungsgemäßen Verfahren hergestellte Verbundstoffbahn 1. Faservliesstoff als Deckmaterial 7, welcher typischerweise ein Flächengewicht zwischen 20 und 35 g/m² aufweist, ist beidseitig mit einem Hotmelt-Klebstoff 6, der mit einem Flächengewicht zwischen jeweils 7 und 20 g/m² auf beide Seiten der Trägerfolie 2 aufgebracht wurde, auf die Trägerfolie 2 kaschiert. Der polymere Puder 3, welcher bei der Lagerung der Folienrolle 4 als Abstandhalter wirkt, ist vollständig geschmolzen und hat sich in dem Hotmelt-Klebstoff 6 verteilt. Aufgrund der geringen Pudermenge ist der negative Einfluss auf die Verbundfestigkeit minimal.

Eine inkrementelle Streckung der Verbundstoffbahn 1 und/oder des Faservliesstoffes vor der Laminierung oder eine Laminierung der Trägerfolie 2 in Form beabstandeten Folienstreifen kann ohne weiteres im Rahmen des erfindungsgemäßen Verfahrens durchgeführt werden.

### Beispiel 1:

Eine Trägerfolie 2 aus SEBS wird in einem Flachfolienextrusionsverfahren mit einer Dicke von 50 µm hergestellt. Nach der Extrusion wird ein polymeres Puder 3 aus Polyethylen niedriger Dichte (LDPE) mit einem mittleren Flächengewicht von 1,5 g/m² auf die Trägerfolie 2 aufgebracht. Danach wird der Teil des Puders 3, der nicht an der Trägerfolie 2 haftet, von dieser abgeblasen oder abgebürstet, wodurch sich das Flächengewicht des Puders 3 auf der Trägerfolie 2 auf etwa 0,7 g/m² reduziert. Die Trägerfolie 2 wird aufgewickelt und kann vor der weiteren Verarbeitung problemlos gelagert und transportiert werden. Bei der Weiterverarbeitung wird die Trägerfolie 2 von der Folienrolle 4 abgerollt und beidseitig mit einem SBS-Hotmelt-Klebstoff versehen. Der SBS-Hotmelt-Klebstoff wird mit einem Flächengewicht von jeweils 10 g/m² bei einer Temperatur von 140 °C auf beide Seiten der Trägerfolie 2 aufgebracht. Der Puder 3 aus LDPE schmilzt bei der Verklebungstemperatur und verteilt sich in dem SBS-Hotmelt-Klebstoff. Anschließend wird beidseitig ein Faservliesstoff mit einem Flächengewicht von 20 g/m² als Deckmaterial 7 auf die Trägerfolie 2 aufkaschiert.

### Beispiel 2:

Eine Monofolie aus SEBS wird in einem Flachfolienextrusionsverfahren mit einer Dicke von 70 µm hergestellt. Die extrudierte Trägerfolie 2 wird mit einem Puder 3 aus EVA mit einem Flächengewicht von 0,8 g/m² bestreut und aufgerollt. Die Folienrolle 4 kann vor der weiteren Verarbeitung transportiert und gelagert werden. Zur weiteren Verarbeitung wird die Trägerfolie 2 von der Folienrolle 4 abgerollt. Nach dem Abrollen der Trägerfolie 2 wird ein Teil des Puders durch einen Bürstprozess von der Trägerfolie 2 entfernt, bevor ein SIS-Hotmelt-Klebstoff mit einer Schmelzetemperatur von 170 °C beidseitig schmelzflüssig auf die Trägerfolie aufgebracht wird. Bei der Verklebungstemperatur schmilzt der EVA-Puder und verteilt sich in dem Hotmelt-Klebstoff 6, der mit einem Flächengewicht von jeweils 15 g/m² auf beide Seiten der Trägerfolie 2 aufgebracht wird. Anschließend wird ein Faservliesstoff mit einem Flächengewicht von 35 g/m² als Deckmaterial 7 auf beide Seiten der Trägerfolie 2 kaschiert.

## Patentansprüche

1. Verfahren zur Herstellung einer elastischen Verbundstoffbahn (1), bei dem ein Deckmaterial (7) unter Verwendung eines Hotmelt-Klebstoffes (6) auf eine aus einem thermoplastischen Elastomer bestehende Trägerfolie (2) aufkaschiert wird,
**dadurch gekennzeichnet, dass** die von einer Folienrolle (4) verarbeitete Trägerfolie (2) zumindest auf einer Seite einen polymeren Puder (3) aufweist, welcher ein Verblocken der Lagen der Trägerfolie (2) in der Folienrolle (4) verhindert, wobei die Schmelztemperatur des Puders (3) kleiner oder gleich der Verklebungstemperatur des Hotmelt-Klebstoffes (6) ist, so dass der Puder (3) bei der Kaschierung schmilzt.

2. Verfahren nach Anspruch 1, **dadurch gekennzeichnet, dass** das Deckmaterial (7) beidseitig auf die Trägerfolie (2) kaschiert wird.

3. Verfahren nach Anspruch 1 oder 2, **dadurch gekennzeichnet, dass** als Deckmaterial (7) ein textiles Material, vorzugsweise ein Nonwoven verwendet wird.

4. Verfahren nach einem der Ansprüche 1 bis 3, **dadurch gekennzeichnet, dass** die Trägerfolie (2) eine durch Extrusion hergestellte Monofolie aus einem Polymer der Gruppe Styrol-Isopren-Styrol-Blockcopolymere, Styrol-Butadien-Styrol-Blockcopolymere, Styrol-Ethylen/Butylen-Styrol-Blockcopolymere, Polyurethane oder Ethylen-Copolymere ist.

5. Verfahren nach einem der Ansprüche 1 bis 4, **dadurch gekennzeichnet, dass** der polymere Puder (3) aus einem Polyolefin besteht.

6. Verfahren nach einem der Ansprüche 1 bis 5, **dadurch gekennzeichnet, dass** der polymere Puder (3) auf der Trägerfolie (2) mit einem Flächengewicht von kleiner oder gleich 1 g/m² vorliegt.

7. Verfahren nach einem der Ansprüche 1 bis 6, **dadurch gekennzeichnet, dass** ein Teil des Puders (3) von der Oberfläche der Trägerfolie (2) abgeblasen oder abgebürstet wird, bevor das Deckmaterial (7) auf die Trägerfolie (2) kaschiert wird.

8. Verfahren nach einem der Ansprüche 1 bis 7, **dadurch gekennzeichnet, dass** als Hotmelt-Klebstoff (6) ein Hotmelt-Klebstoff (6) aus der Gruppe der SIS- und SBS-basierten Polymere verwendet wird.

9. Verfahren nach einem der Ansprüche 1 bis 8, **dadurch gekennzeichnet, dass** der Hotmelt-Klebstoff (6) mit einem Flächengewicht zwischen jeweils 7 und 20 g/m² auf jede Seite der Trägerfolie (2), auf die das Deckmaterial (7) kaschiert wird, aufgebracht wird.

## Claims

1. A method for producing an elastic composite material web (1) in which a covering material (7) is laminated onto a carrier film (2) consisting of a thermoplastic elastomer using a hot melt adhesive (6), **characterised in that** the carrier film (2) processed from a film roll (4) has a polymeric powder (3) at least on one side, which prevents blocking of the layers of the carrier film (2) in the film roll (4), wherein the melting point of the powder (3) is lower than or the same as the bonding temperature of the hot melt adhesive (6) so that the powder (3) melts during the lamination.

2. The method according to claim 1, **characterised in that** the covering material (7) is laminated onto both sides of the carrier film (2).

3. The method according to claim 1 or 2, **characterised in that** a textile material, preferably a nonwoven, is used as covering material (7).

4. The method according to any one of claims 1 to 3, **characterised in that** the carrier film (2) is a monofilm produced by extrusion from a polymer of the group of styrene isoprene styrene block copolymers (SIS), styrene butadiene styrene block copolymers (SBS), styrene ethylene/butylene styrene block copolymers (SEBS), polyurethane or ethylene copolymers.

5. The method according to any one of claims 1 to 4, **characterised in that** the polymeric powder (3) consists of a polyolefin.

6. The method according to any one of claims 1 to 5, **characterised in that** the polymeric powder (3) is present on the carrier film (2) with a weight per unit area of less than or equal to 1 g/m².

7. The method according to any one of claims 1 to 6, **characterised in that** some of the powder (3) is blown off or brushed off the surface of the carrier film (2) before the covering material (7) is laminated onto the carrier film (2).

8. The method according to any one of claims 1 to 7, **characterised in that** a hot melt adhesive (6) from the group of SIS- and SBS-based polymers is used as hot melt adhesive (6).

9. The method according to any one of claims 1 to 8, **characterised in that** the hot melt adhesive (6) having a weight per unit area between 7 and 20 g/m² in each case is applied to each side of the carrier film (2) onto which the covering material (7) is laminated.

## Revendications

1. Procédé de fabrication d'une bande de matériau composite élastique (1), dans lequel un matériau couvrant (7) est plaqué en utilisant une colle thermofusible (6) sur un film support composé d'un élastomère thermoplastique (2),
**caractérisé en ce que** le film support (2) traité par un rouleau à film (4) présente d'un côté une poudre polymère (3) qui empêche un blocage des couches de film support (2) dans le rouleau à film (4), la température de fusion de la poudre (3) étant inférieure ou égale à la température de collage de la colle thermofusible (6), de sorte que la poudre (3) fond lors du placage.

2. Procédé selon la revendication 1, **caractérisé en ce que** le matériau couvrant (7) est plaqué des deux côtés sur le film support (2).

3. Procédé selon la revendication 1 ou 2, **caractérisé en ce qu'**on utilise comme matériau couvrant (7) un matériau textile, de préférence un non-tissé.

4. Procédé selon une des revendications 1 à 3, **caractérisé en ce que** le film support (2) est un monofilm fabriqué par extrusion fait d'un polymère du groupe des copolymères blocs de styrène-isoprène-styrène, copolymères blocs de styrène-butadiène-styrène, copolymères blocs de styrène-éthylène/butylène-styrène, polyuréthanes ou copolymères d'éthylène.

5. Procédé selon une des revendications 1 à 4, **caractérisé en ce que** la poudre polymère (3) est composée d'une polyoléfine.

6. Procédé selon une des revendications 1 à 5, **caractérisé en ce que** la poudre polymère (3) est présente sur le film support (2) en un grammage inférieur ou égal à 1 g/m².

7. Procédé selon une des revendications 1 à 6, **caractérisé en ce qu'**une partie de la poudre (3) est soufflée ou brossée de la surface du film support (2) avant de plaquer le matériau couvrant (7) sur le film support (2).

8. Procédé selon une des revendications 1 à 7, **caractérisé en ce qu'**on utilise comme colle thermofusible (6) une colle thermofusible (6) du groupe des polymères à base de SIS et de SBS.

9. Procédé selon une des revendications 1 à 8, **caractérisé en ce que** la colle thermofusible (6) est appliquée avec un grammage compris entre respectivement 7 et 20 g/m² sur chaque côté du film support (2) sur lequel le matériau couvrant (7) est plaqué.
